# EUROPEAN PATENT APPLICATION

(11) **EP 4 789 855 A1**
(43) Date of publication of application: **12.08.2026**
(21) Application number: 25305168.4
(22) Date of filing: 05.02.2025
(51) Int. Cl.: B29D 11/00

(54) **METHOD FOR MANUFACTURING AN OPTICAL DEVICE**

(71) Applicant: Essilor International, 94220 Charenton-Le-Pont (FR)
(72) Inventor: UHALTE NOGUES, Sira, 94100 ST MAUR DES FOSSES (FR); JOUSSELIN, Caroline, 94210 LA VARENNE SAINT-HILAIRE (FR); MEYNEN, Mathieu, 94340 JOINVILLE-LE-PONT (FR); DIVO, Fabien, 95160 MONTMORENCY (FR)
(74) Representative: Plasseraud IP

(57) **Abstract**

System for manufacturing an optical device (10), the system being configured for:
- applying a hydrophobic coating over at least a central region (24) of a surface (12B, 14A) of a lens (12, 14),
- machining a peripheral edge (20) of the lens (12, 14),
- applying an adhesive (26) on a region (22) of the surface (12B, 14A) of the lens (12, 14) and/or on a corresponding region of the optical element (16), and fixing an optical element (16) to the lens (12, 14) with the adhesive (26).

## Description

### Field of the invention

The invention relates to a method for manufacturing an optical device comprising an optical element, and to an optical device manufactured through such a method.

### Background of the invention

Optical devices may comprise a lens and an optical element glued together. The manufacturing of this type of optical devices may involve the application of coating layers, for example anti-reflective coating on an uncut lens, and the edging of the uncut lens.

However, it has been observed that the edging generates a lot of debris, which are very adherent to the anti-reflective coating due to its mineral nature. These debris require complicated and fastidious cleaning of the lenses before assembly, as the presence of solid particles or moisture resultant from cleaning gaps cannot be remedied after gluing the lens and the optical element and is very detrimental to the functionality of the optical device. Therefore, there is a need for a method for manufacturing an optical device comprising an optical element, and to an optical device manufactured through such a method, that do not have the drawbacks presented previously.

### Summary of the invention

The invention aims at solving the afore-mentioned problems. To this end, the invention relates to a system for manufacturing an optical device, the system being configured for:
- applying a hydrophobic coating over at least a central region of a surface of a lens,
- machining a peripheral edge of the lens,
- applying an adhesive on a region of the surface of the lens and/or on a corresponding region of the optical element, and fixing an optical element to the lens with the adhesive.

Such a system reduces adhesion of the cutting debris from the region of the surface of the lens, thanks to the anti-adhesive properties of the hydrophobic coating, while allowing a good bonding of the adhesive on the peripheral region, where the hydrophobic coating is absent during fixing and where the cleaning is not as crucial.

The system may be further configured for:
- removing debris deposited on the surface of the lens during the machining of the peripheral edge.

The region of the surface of the lens may be a peripheral region of the surface of the lens. Alternatively, the region of the surface of the lens may at least partly extend in a central region of the surface of the lens.

The optical device may comprise two lenses, the lens being a back lens and/or a front lens of the optical device, the optical element being fixed to the back lens and/or the front lens. Alternatively, the optical device may comprise a single lens.

The lens may comprise at least one other coating, such as an anti-reflective coating, the outermost coating defining the surface.

The anti-reflective coating may be applied at least in the central region of the surface.

The machining may shape the external edge of the lens so that the lens presents a peripheral contour corresponding to a frame the optical device is destined to be mounted on.

In some embodiments, the machining may be implemented before the application of the hydrophobic coating.

Preferably, the machining is implemented after the application of the hydrophobic coating. The optical element may be fixed by leaving an air gap between the optical element and the central region of the surface of the lens.

The peripheral region may extend along the peripheral edge of the lens after the machining. The central region may be contiguous to the peripheral region and extend apart from the peripheral edge after the machining.

The central region may be complementary with the peripheral region.

The adhesive may be applied over the antireflective coating or over the substrate, when applied to the lens.

Alternatively, the adhesive may be applied to whichever coating is the outermost in the peripheral region, for example a hard coat.

The region of the surface may be a peripheral region of the surface, the peripheral region of the surface not being covered by the hydrophobic coating.

The system may be configured to apply a mask over the peripheral region of the surface of the lens during the application of the hydrophobic coating.

This feature allows to prevent deposition of the hydrophobic coating on the peripheral region, the hydrophobic coating thus being from the peripheral region during fixing.

The mask may also be applied during the application of at least one other coating on the lens. The system may be configured for:
- removing at least the hydrophobic coating from at least the peripheral region of the surface of the lens.

This feature allows localized removal of the hydrophobic coating from the peripheral region, for example after a deposition over the whole surface.

The removing may be performed after the machining, using an abrasive tool to remove a thin layer comprising at least the hydrophobic coating over the peripheral region of the surface of the lens.

This feature allows the localized removal of the hydrophobic coating form the peripheral region in a simple and accurate manner.

The abrasive tool may comprise a vibrating support comprising an abrasive ring placed in contact with the peripheral region of the surface of the lens, and possibly a lateral flange fixed to the abrasive ring and disposed around the edges of the lens, the vibrating support being configured to vibrate in at least one direction sensibly parallel to the surface of the lens. Such an abrasive tool is simple to manufacture and operate use, does not require complicated equipment, and allows a localized removal of the hydrophobic coating layer.

The system may comprise a plasma treatment device for removing at least the hydrophobic coating over the peripheral region of the surface of the lens.

Such a device allows a fast and complete removal of the organic based coatings from the lens, with a good finished surface aspect.

The system may be also configured for applying a mask over a central region of the surface of the lens before removing at least the hydrophobic coating over the peripheral region of the surface of the lens with the plasma treatment device.

Such a feature allows preventing removal of the hydrophobic coating form the central region of the lens to allow for efficient cleaning of the machining debris.

Alternatively, a directive plasma treatment device may be used, such as a plasma torch, to have a localized plasma treatment in the peripheral region.

The system is configured for removing the hydrophobic coating from the entirety of the surface of the lens using the plasma treatment device.

This feature allows a more simple removal of the hydrophobic coating without the need for localization, and such a complete removal is implemented after the machining and the cleaning of the debris.

Applying the hydrophobic coating may comprise applying a pre-shaped laminated film patch comprising at least the hydrophobic coating, over the central region of the surface of the lens, the film patch having a surface area smaller than a surface area of the surface of the lens, an external edge of the film patch delimiting the peripheral region.

Such a feature allows a localized application of the hydrophobic coating on the central region only by selecting a laminated patch of the desired shape and size.

The film patch may comprise the hydrophobic coating and at least one other coating, the hydrophobic coating and the at least one other coating being applied simultaneously.

This feature allows the simultaneous deposition of several other coatings along with the hydrophobic coating, accelerating and simplifying the manufacturing of the optical device, the hydrophobic coating being placed over the other coatings.

The system may be configured for shaping the film patch to present a correct curvature to be applied to the surface, by fixing the film patch to a carrier, thermoforming the carrier and the film patch fixed to the carrier, and separating the film patch from the carrier to apply the film patch to the surface.

This feature improves the bonding of the film patch to the surface of the lens by pre-shaping the patch to present the adequate curvature.

The peripheral region of the surface of the lens may extend over a width comprised between 0.5 mm and 5 mm, for example between 1 mm and 3 mm, from the peripheral edge of the lens after machining.

This feature allows to have a sufficient area for depositing the adhesive while keeping the size of the non-transparent area limited.

The invention also relates to an optical device comprising at least one lens and an optical element, the optical device having been manufactured using a system configured for:
- applying a hydrophobic coating over at least a central region of a surface of the lens,
- machining a peripheral edge of the lens,
- applying an adhesive on a peripheral region of the surface of the lens and/or on a corresponding region of the optical element, and fixing an optical element to the lens with the adhesive.

The optical device may also have been manufactured by a system configured for:
- removing debris deposited on the surface of the lens during the machining of the peripheral edge.

The invention also relates to eyewear comprising an optical device, the optical device comprising a lens and an optical element, the optical device having been manufactured by:
- applying a hydrophobic coating over at least a central region of a surface of the lens,
- machining a peripheral edge of the lens,
- applying an adhesive on a peripheral region of the surface of the lens and/or on a corresponding region of the optical element, and fixing an optical element to the lens with the adhesive.

The eyewear may also have been manufactured by a system configured for:
- removing debris deposited on the surface of the lens during the machining of the peripheral edge.

The invention further relates to a method for manufacturing an optical device, the method comprising:
- applying a hydrophobic coating over at least a central region of a surface of a lens,
- machining a peripheral edge of the lens,
- applying an adhesive on a peripheral region of the surface of the lens and/or on a corresponding region of the optical element, and fixing an optical element to the lens with the adhesive.

The method may further comprise:
- removing debris deposited on the surface of the lens during the machining of the peripheral edge,

### Brief description of the drawings

Figure 1 is a side view in cross section of an ophthalmic device comprising at least one lens and an optical element,
Figure 2 is a front view of a lens of the ophthalmic device of figure 1,
Figure 3 is a schematic side view in cross section of a first embodiment of a manufacturing system after the invention,
Figure 4 is a schematic side view in cross section of a second embodiment of a manufacturing system after the invention,
Figure 5 is a schematic side view in cross section of a fourth embodiment of a manufacturing system after the invention, and
Figures 6 and 7 are schematic side views in cross section of a fourth embodiment of a manufacturing system after the invention.

### Detailed description of embodiments

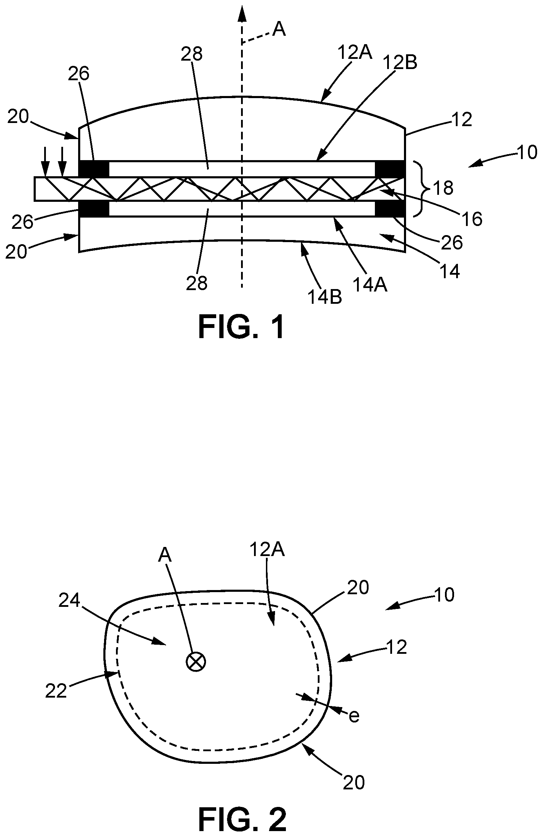

An optical device 10 is shown on figure 1, comprising a front lens 12, a back lens 14 and an optical element 16 placed between the front lens and the back lens.

The front lens 12 and/or the back lens 14 may be ophthalmic lenses that help correct vision disorders or refractive errors, also called ametropia, such as myopia, hyperopia, astigmatism and presbyopia. An ophthalmic lens is manufactured on the basis of a wearer's ophthalmic prescription. The prescription includes different information such as the sphere value, the cylinder value, the prism and the addition power.

The optical element 16 may be an active optical element. By active optical element one means an optical element in which a value of a parameter of a functionality of the optical element may be modified. The value of the parameter may be modified by applying a signal, for example an electrical signal to terminals of the active optical element. The functionality may be one of the following:
- a transmittance level of the active optical element,
- a tint of the active optical element,
- a reflectance level of the active optical element and
- a parameter of a polarization of the active optical element, for example a polarization angle of the active optical element,
- an optical power of the active optical element,
- elements displayed by the active optical element. The elements may be images, symbols, letters, or texts. In embodiments, the elements to be displayed and the position of these elements may be selected.

The active optical element, when configured to display elements, may notably include a waveguide, arranged to guide optical waves emitted from an outside source into the space between the front and back lenses and thereby project images on the inner optical surfaces of the front 12 and/or back lens 14, generally of the back lens 14.

In order to perform optimally, it is preferable to leave a thin air gap between the surfaces of the waveguide and the inner surfaces of the front lens 10 and the back lens 14, to benefit from the difference in optical index, which is much larger with air, to maximize reflectivity at the waveguide's surfaces.

This arrangement can also be beneficial for other types of optical elements 16 requiring or benefitting from an air gap between the optical element 16 and the optical surfaces of the lenses 12 or 14, for example to have an improved reflectivity at the interface compared to a direct interface with the lens material.

The manufacturing of the optical device 10 may involve the application of coating layers on the uncut lens, which has not yet been edged to fit in the frame.

Notably, when the optical element 16 is an active optical element configured to display elements the application of an anti-reflective coating on each surface of the lenses advantageously avoids parasite multiple reflections which would largely degrade the comfort of the user.

The lens is then machined at the peripheral edge to fit in the frame, in what is called the edging step, before the front and back lenses 12, 14 and the optical element 16 are assembled to form the optical device 10 to be mounted in the frame.

The optical element 16 may be fixed to the front and back lenses 12, 14 by peripheral gluing. Using peripheral gluing offers advantages of masking the gluing area by the frame once the lens is mounted thereon and avoiding interfering with the field of vision or creating an aesthetically unpleasant appearance. This further provides a seal at the edges of the lens, that has the advantage of preventing the entry of outside particles into the air gaps.

The front lens 12 and the back lens 14 are aligned along a common optical axis A and spaced apart from each other along the optical axis A to define a cavity 18 between them.

The front and back lenses 12, 14, which may also be designated by the expression wafer, are manufactured from a transparent substrate material, such as a mineral glass or an organic glass.

Each of the front lens 12 and back lens 14 has a respective front surface 12A, 14A and back surface 12B, 14B, with the back surface 12B of the front lens 12 and the front surface 14A of the back lens 14 facing the cavity 18.

Both the front 12A, 14A and back surfaces 12B, 14B of the front lens 12 and back lens 14 are optical surfaces, allowing a user of the optical device to see through them.

When the optical device 10 is used by the user, for example when worn in a frame (not shown), the back surface 12B, 14B is closer to the user's eye and the front surface 12A, 14A is farther from the user's eye.

Furthermore, the front surface 12A of the front lens 12 and/or the back surface 14B of the back lens 14 may be machined to satisfy the user's ophthalmic prescription.

The front surface 14A of the back lens 14 and the back surface 12B of the front lens 12 may be substantially flat.

Alternatively, the front surface 14A of the back lens 14 and the back surface 12B of the front lens 12 may present a same predetermined curvature, which is taken into account in the machining of the other optical surfaces to obtain the desired ophthalmic correction.

The wearer's ophthalmic prescription is a set of data, called prescription data hereinafter, determined by a healthcare professional, for instance an ophthalmologist. The prescription data includes different information related to the wearer such as the sphere value, the cylinder value, the prism and, if relevant, the addition power. Such prescription data are necessary to design and manufacture an ophthalmic lens intended to be worn by the wearer in order to correct vision disorders or refractive errors, also called ametropia. For instance, when the wearer suffers from presbyopia, the prescription data includes an addition power to manufacture progressive ophthalmic lenses adapted to this ametropia.

Alternatively, the front and back lenses 12, 14 are plano lenses, which do not offer any ophthalmic correction.

Alternatively, one of the front or back lens 12, 14 is a plano lens, while the other has an ophthalmic power adapted to the ophthalmic prescription of the user.

Each of the front and back lenses 12, 14 also has a peripheral edge 20, which has been machined to fit the optical device 10 in a frame.

As shown on figure 2, the front surface 12A, 14A and the back surface 12B, 14B of the front lens 12 and the back lens 14 each comprise a peripheral region 22 and a central region 24. The peripheral region 22 extends along the peripheral edge 20 of the lens 12, 14 and has a predetermined width e from this peripheral edge 20, the width e being comprised, for example, between 0.5 mm and 5 mm and preferably between 1 mm and 3 mm.

The central region 24 of the front or back lens 12, 14 may be complementary with the peripheral region 22. Thus, the central region 24 and the peripheral region 22 together cover the entirety of the corresponding optical surface of the lens 12, 14.

An antireflective coating in applied to both the front 12A, 14A and back 12B, 14B surfaces of the front lens 12 and of the back lens 14, at least in the central region 24 thereof.

Applying the antireflective coating to the front lens 12, more precisely to the back surface of the front lens 12, allows avoiding that part of the light exiting the waveguide toward the front lens is reflected back to the user's eye, creating ghost images and superimposing them onto the directly viewed image.

In some embodiments, the antireflective coating is present in both the central region 24 and peripheral region 22 of each such optical surface.

In other embodiments, the antireflective coating is present only in the central region 24 and not in the peripheral region 22.

Such an antireflective coating may comprise a stack of layers of alternating materials having low and high optical indexes, as known in the art. This type of antireflective coating is considered as an inorganic type of coating and has hydrophilic surfaces properties.

Other coatings may be present on the central region 24 of either surfaces 12A, 12B, 14A, 14B, such as a hard coat and/or an anti-fog or anti-smudge coating.

The edging step of the front lens 12 and/or the back lens 14 may generate a lot of debris, which are very adherent to the anti-reflective coating due to its mineral nature. These debris require complicated and fastidious cleaning of the front lens 12 and/or the back lens 14 before assembly, as the presence of solid particles or moisture resultant from cleaning in the air gaps cannot be remedied after assembly and is very detrimental to the functionality of the lens. The addition of a hydrophobic coating, such as an anti-smudge coating, over the anti-reflective coating has been shown to largely improve this situation, as it greatly reduces the adhesion of the solid particles and moisture to the optical surfaces, facilitating the cleaning.

This hydrophobic coating also reduces the risks of staining of the inner surfaces of the lens after assembly, and is therefore highly beneficial even without considering the debris from the edging of the lenses.

However, the assembly of the lens is complicated by the hydrophobic nature of the coating, which prevents adhesion to the inner surfaces of the lens.

Therefore, no hydrophobic coating, such as an anti-smudge coating, is present as the outermost layer in the peripheral region 22 of the back surface 12B of the front lens 12 and in the peripheral region 22 of the front surface 14A of the back lens 14.

The optical element 16 is, for example, a waveguide arranged in the cavity 18 to guide light waves emitted by a projection module outside the optical device 10 through the wave guide 16 to project on the optical surfaces of or the back lens 14. This allows the display of images over the field of vision of the user, which is known as augmented reality, as known in the art.

The optical element 16 is placed in the cavity 18, between the front lens 12 and the back lens 14 and is fixed to the front lens 12 and/or to the back lens 14 with an adhesive 26.

Advantageously, the optical element 16 is placed at a small distance for the front surface 14A of the back lens 14 and/or from the back surface 12B of the front lens 12, thereby leaving an air gap 28 between the optical element 16 and the optical surfaces of the front lens 12 and/or the back lens 14.

The air gap 28 separates the optical element 16 and the front lens 12 or back lens 14, allowing for a better optical index adaptation, the optical index of air being very close to 1, which is lower than almost all other materials.

The adhesive 26 is placed only in the peripheral region 22 of the front surface 14A of the back lens 14 and/or of the back surface 12B if the front lens 12 and is not in direct contact with a hydrophobic coating in the peripheral region 22, such as the anti-smudge coating. Instead, the adhesive 26 is applied over a hydrophilic coating, such as the antireflective coating, or directly over the substrate forming the front lens 12 and/or the back lens 14.

Advantageously, the adhesive 26 extends along the entire periphery of the front lens 12 and/or the back lens 14, sealing the air gap 28 from the outside to prevent the entry of objects, such as dust particles.

The adhesive may comprise a glue and/or a rubber material.

The adhesive may be a pressure sensitive adhesive.

In a variant, the optical device 10 comprises only the front lens 12 or the back lens 14 instead of both. Such an optical device 10 may be installed in a head-mounted device with one of the front or back lenses 12, 14 replaced with a second different optical element that is not destined for direct through-vision by the user, for example.

More generally, the optical device 10 is designed to be at least part of a piece of eyewear. Eyewear encompasses any type of head mountable devices designed to be worn in or in front at least one eye of a wearer, in any suitable form factor.

Eyewear includes head-mounted display devices (e.g. near eye display devices, augmented reality devices, virtual reality devices or mixed reality devices), helmets (with a visor), eyeglasses, googles, masks, visors, contact lenses, intraocular implants. Alternatively, the optical device 10 a sub-assembly comprising only the front lens 12 or the back lens 14, the other lens being assembled at a later stage, before mounting in the frame.

This variant is considered for the rest of the description of embodiments of a manufacturing method and manufacturing system below, allowing to reach this sub-assembly comprising a single lens and the optical element fixed thereon, with any supplemental manufacturing steps being available for reaching the complete optical device 10 as shown in figure 1.

A system for manufacturing the optical device described above is described below.

The system comprises a plurality of subsystems configured to implement respective manufacturing steps in order to manufacture the optical device 10.

The system is configured to manufacture the optical device from an optical element 16 as described above and a lens blank, thereafter referred to as "the lens", the lens being shaped to become the front lens 12 or the back lens 14 of the optical device 10.

The lens has two opposite optical surfaces, which are planned to become the front surface 12A, 14A and the back surface 12B, 14B of the front or back lens 12, 14.

One of these optical surfaces is designated by the expression as the surface, or as the main surface hereinafter, and is the optical surface planned to face the cavity 18 and receive the optical element 16 fixed thereto. The surface is thus planned to become either the front surface 14A of the back lens 14 or the back surface 12B of the front lens 12.

More generally, the surface referred to in the context of the disclosure may be any surface of a lens requiring adhesion of a component. Therefore, the surface may be a main surface, an optical surface, a side surface, or any other such surface of a lens.

An anti-reflective coating has preferably been applied at least to the surface of the lens, and advantageously to both optical surfaces of the lens.

Additionally, other coatings may be present over the anti-reflective coating, with the outermost coating being non-hydrophobic.

The peripheral contour of the lens has not been machined prior to the use of the system, the lens having, for example, a circular shape.

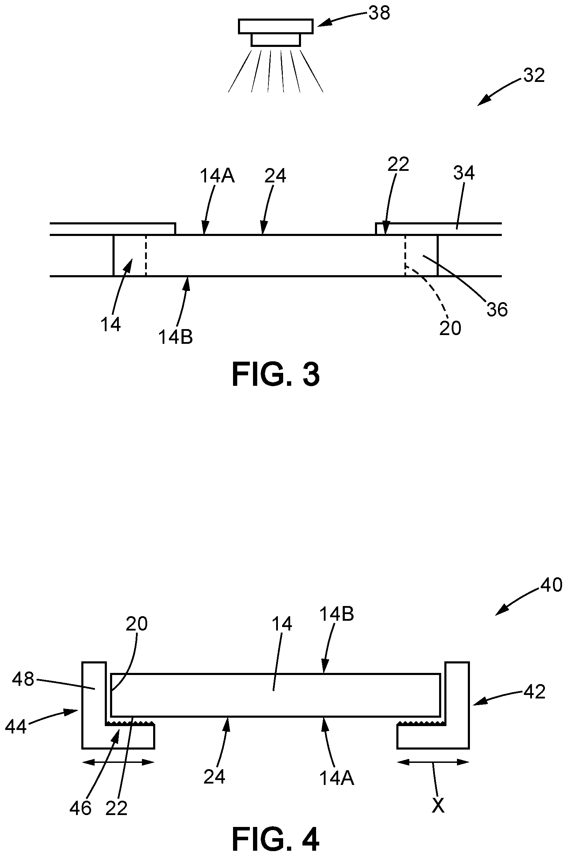

A first embodiment of the system after the invention is described below, in reference to figure 3. In this description, the lens is planned to become the back lens 14 and the surface is the front surface 14A.

The system comprises a first subsystem 32, shown on figure 3, configured to apply a hydrophobic coating, preferably an anti-smudge coating, over only the central region 24 of the surface 14A of the lens 14, before the peripheral edge 20 has been machined.

The hydrophobic coating is applied over the anti-reflective coating and over any other coating that may be present in the central region.

To this end, the first subsystem is configured to apply a mask 34 over the surface 14A of the lens 14. The mask 34 covers the peripheral region 22 of the surface and, preferably, any additional region 36 that is planned to be later removed by machining, while leaving free the central region 24 of the surface.

The first subsystem 32 is then configured to apply the hydrophobic coating, for example by dipping the lens, by spraying the coating through a nozzle 38, by sputtering, or through any other known method from the art.

The first subsystem 32 is then configured to remove the mask 34, leaving the central region 24 of the surface 14A covered by the hydrophobic coating and the peripheral region 24 of the surface 14A free of the hydrophobic coating.

The mask position may be adjusted according to the position of the optical centre of the lens, so as to cover different optical centre position versus the edged shape, corresponding to different user pupillary distances.

The system comprises a second subsystem, configured for machining the peripheral edge of the lens, for example by implementing a cutting tool and/or a filing tool. Such a subsystem is known in the art and thus not described in detail here.

The second subsystem is further configured to remove debris deposited on the surface of the lens during the machining. For example, the second subsystem comprises at least one blowing nozzle for blowing air and/or water over the surface to remove the debris.

The system further comprises a third subsystem configured for applying the adhesive 26 on the peripheral region 22 of the surface of the lens and/or on a corresponding region of the optical element 16, and for fixing the optical element 16 to the lens with the adhesive 26. The third subsystem may comprise a moving nozzle for applying the adhesive on the peripheral region around the surface of the lens and/or on a corresponding region of the optical element 16.

The adhesive 26 may be deposited directly on the peripheral region 26 of the lens surface, or as an alternative, the adhesive 26 may be deposited on the corresponding region of the optical element 16, and then the lens is contacted to the optical element through the adhesive.

The corresponding region of the optical element 16 is the regions destined to be directly facing the peripheral region 22 once the optical element 16 is fixed to the lens.

The adhesive may thus be applied to the peripheral region 22 of the lens, to the optical element 16, or to both.

The third system may also comprise means for handling and positioning the optical element over the surface of the lens and for applying a predetermined pressure on the optical element to fix the optical element to the surface.

The third subsystem may also comprise curing means for the adhesive, for example heating means or light emitting means with a specific wavelength range, depending on the type of adhesive used.

In a variant of this first embodiment, the lens 14 initially has neither the anti-reflective coating nor the anti-smudge applied to the surface 14A. The second subsystem is then configured to apply both the anti-reflective coating and the anti-smudge coating in this order, with the mask applied to the surface during the deposition of both coatings. The peripheral region then has no anti-reflective coating in addition of having no anti-smudge coating as described above. This is not a problem as the peripheral region of the lens is not an optically active part of the lens, as it is intended to be covered by the adhesive in the finished optical device.

A method for manufacturing the optical device 10 with the system after the first embodiment comprises the following steps, in this order:
- providing a lens 14 and an optical element 16,
- applying a mask 34 over the peripheral region 22 of the surface 14A of the lens 14,
- applying the hydrophobic coating over at least the central region 24 of the surface 14A of the lens 14, the peripheral region 22 being covered by the mask 34,
- removing the mask 34,
- machining a peripheral edge 20 of the lens 14,
- removing debris deposited on the surface 14A of the lens 14 during the machining of the peripheral edge 20, and
- applying an adhesive 26 on a peripheral region 24 of the surface 14A of the lens 14 and/or on a corresponding region of the optical element 16, and fixing the optical element 16 to the lens 14 with the adhesive 26.

A second embodiment of the system after the invention is described below.

The system of the second embodiment comprises a fourth subsystem configured to apply the hydrophobic coating, preferably an anti-smudge coating, over the entire surface 14A of the lens 14, before the peripheral edge 20 has been machined.

The hydrophobic coating is applied, for example, by dipping the lens, by spraying the coating, by sputtering, or through any other known method from the art.

The hydrophobic coating is applied thus over the anti-reflective coating and over any other coating that may be present, both in the central region 24 and in the peripheral region 22.

The system according to the second embodiment comprises the second subsystem as described in the first embodiment above, configured for machining the peripheral edge 20 of the lens 14 and to remove debris deposited on the surface 14A of the lens 14 during the machining.

The system according to the second embodiment comprises a fifth subsystem 40, configured to remove at least the hydrophobic coating from the peripheral region 22 of the surface 14A of the lens 14.

To this end, the fifth subsystem 40 may comprise an abrasive tool, such as a piloted drilling tool and/or a piloted polishing tool, which is configured to remove a thin layer of the surface 14A of the lens 14, in the peripheral region 22 only.

For example, the fifth subsystem is comprised in the second subsystem, the drilling and polishing tools being the same tools used for machining the edge of the lens.

The thin layer removed from the surface 14A comprises at least the anti-smudge coating, and has a depth preferably comprised between 10 micrometres and 100 micrometres.

The system further comprises the third subsystem as described above, configured for applying the adhesive 26 on the peripheral region 22 of the surface of the lens and/or on a corresponding region of the optical element 16, and for fixing the optical element 16 to the lens with the adhesive 26.

In a variant of the second embodiment, the fifth subsystem 40 is a specific subsystem comprising an abrasive tool 42 as shown on figure 4.

The abrasive tool 42 comprises a vibrating support 44 for the lens, the vibrating support comprising an abrasive ring 46 placed in contact with the peripheral region 22 of the surface 14A of the lens 14, and a lateral flange 48 fixed to the abrasive ring 46 and disposed around the peripheral edge 20 of the lens 14.

The abrasive ring 46 comprises an abrasive surface facing the lens 14 and in contact with the peripheral region 22 of the surface 14A.

The vibrating support 44 is configured to vibrate in at least one direction X sensibly parallel to the surface 14A of the lens 14, and preferably at least two directions sensibly parallel to the surface of the lens. For example, the vibrating support 44 is placed on a vibrating table.

The vibrating support 44 is configured to maintain the vibration for a predetermined duration, sufficient to remove the thin layer from the peripheral region 22 of the surface 14A.

In a third variant of the second embodiment, the fifth subsystem comprises a non-contact tool for removing the thin layer in the peripheral region 22.

The non-contact tool may be an electrical discharge tool, such as an atmospheric pressure or close corona discharge tool, a plasma torch, configured to generate a directed plasma, such as a radiofrequency plasma or a microwave plasma, or a laser, such as a Nd-YAG laser.

A method for manufacturing the optical device 10 with the system after the second embodiment comprises the following steps, in this order:
- providing a lens and an optical element,
- applying the hydrophobic coating over the entire surface 14A of the lens 14,
- machining a peripheral edge 20 of the lens,
- removing a thin layer comprising at least the hydrophobic coating from the peripheral region 14A of the surface 14,
- removing debris deposited on the surface 14A of the lens 14 during the machining of the peripheral edge 20 and, eventually, during the removing of the thin layer, and
- applying an adhesive 26 on a peripheral region 22 of the surface 14A of the lens 14 and/or on a corresponding region of the optical element 16, and fixing the optical element 16 to the lens 14 with the adhesive 26.

A third embodiment of the system after the invention is described below.

The system of the third embodiment comprises the fourth subsystem, as described above, configured to apply the hydrophobic coating, preferably an anti-smudge coating, over the entire surface 14A of the lens 14, before the peripheral edge 20 has been machined.

The hydrophobic coating is applied over the anti-reflective coating and over any other coating that may be present, both in the central region 24 and in the peripheral region 22.

The hydrophobic coating is applied, for example, by dipping the lens, by spraying the coating, by sputtering, or through any other known method from the art.

The system according to the third embodiment comprises the second subsystem, as described above, configured for machining the peripheral edge 20 of the lens 14 and to remove debris deposited on the surface 14A of the lens 14 during the machining.

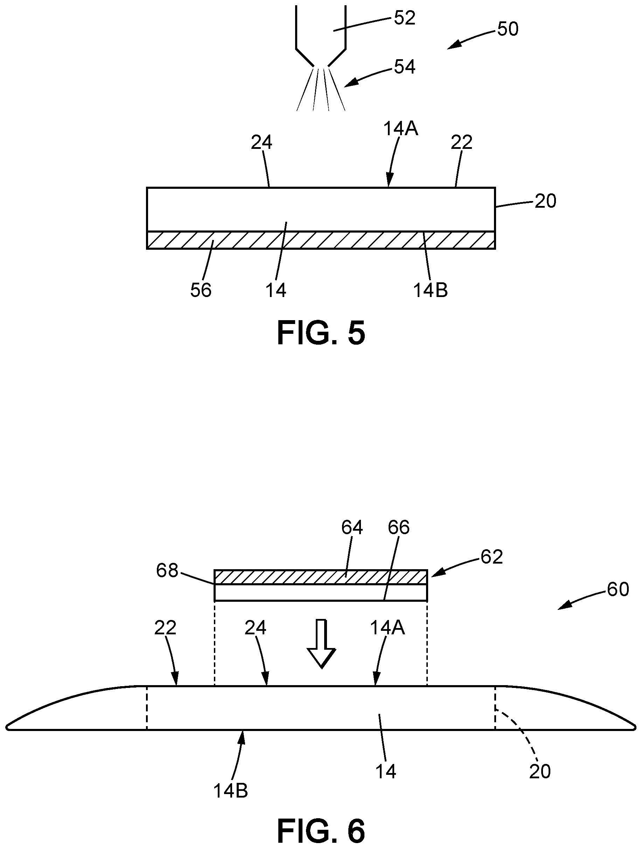

The system according to the third embodiment comprises a sixth subsystem 50, shown on figure 5, configured to remove at least the hydrophobic coating from the entirety of the surface 14A of the lens 14.

The sixth subsystem 50 comprises, for example, a plasma tool 52 configured to generate and direct a plasma 54 toward the surface 14A of the lens 14 in order to remove the hydrophobic coating therefrom.

The plasma 54 contains energetic particles, such as free electrons, ions, radicals, etc, that degrade chained molecules from the hydrophobic coating, such as perfluorinated compounds. The other optical surface 14B of the lens 14 may be covered by a protection film 56 during the application of the plasma 54, to prevent removing the hydrophobic coating from it.

In the third embodiment, the hydrophobic coating is removed from the central region 24 and the peripheral region 22 of the surface 14A of the lens 14. Thus, the removal of the hydrophobic coating is implemented after the debris from the machining have been cleaned, to benefit from the easier cleaning offered by the hydrophobic coating.

The system after the third embodiment further comprises the third subsystem as described above, configured for applying the adhesive 26 on the peripheral region 22 of the surface of the lens and/or on a corresponding region of the optical element 16, and for fixing the optical element 16 to the lens with the adhesive 26.

In a variant of the third embodiment (not shown), the sixth subsystem 50 is configured to apply a mask over the central region 24 of the surface 14A of the lens 14 before removing the hydrophobic coating. The mask is then removed after the hydrophobic coating has been removed in the peripheral region 22.

A method for manufacturing the optical device 10 with the system after the third embodiment comprises the following steps, in this order:
- providing a lens 14 and an optical element 16,
- applying the hydrophobic coating over the entire surface 14A of the lens 14,
- machining a peripheral edge 20 of the lens 14,
- removing debris deposited on the surface 14A of the lens 14 during the machining of the peripheral edge 20,
- removing at least the hydrophobic coating from the entirety of the surface 14A, and
- applying an adhesive 26 on a peripheral region 22 of the surface 14A of the lens 14 and/or on a corresponding region of the optical element 16, and fixing the optical element 16 to the lens 14 with the adhesive 26.

A fourth embodiment of the system after the invention is described below.

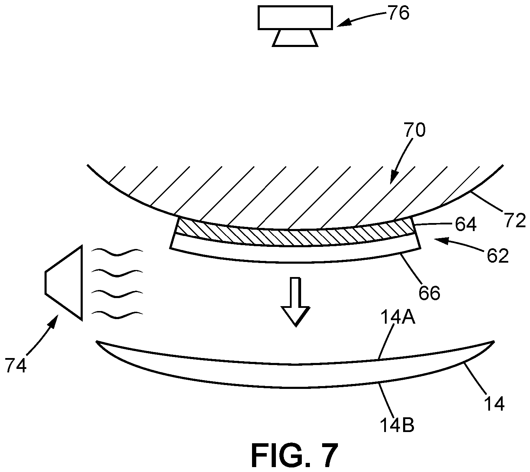

The system of the third embodiment comprises a seventh subsystem 60, shown on figures 6 and 7, configured to apply the hydrophobic coating, preferably an anti-smudge coating, over only the central region 24 of the surface 14A of the lens 14, by applying a pre-shaped laminated film 62 patch comprising at least the hydrophobic coating 64 over the central region 24 of the surface 14A of the lens 14.

Preferably, as shown on figure 6, the pre-shaped laminated patch 62 comprises the anti-reflective coating 66 and the hydrophobic anti-smudge coating 64. This allows a simultaneous application of both coatings.

The film patch 64 is selected to have a size and surface area smaller that the size and surface area of the surface 14A of the lens 14 after machining, and thus to cover only the central region 24 of the surface 14A after machining.

Thus, when applied to the surface 14A of the lens 14, an external edge 68 of the film patch 62 delimitates the peripheral region 22 of the surface 14A, on which the film patch 62 is absent. The seventh subsystem 60 is preferably configured to apply the film patch 62 before the lens 14 is machined to form the peripheral edge 20.

The system according to the fourth embodiment also comprises the second subsystem as described above, configured for machining the peripheral edge of the lens and to remove debris deposited on the surface of the lens during the machining.

The system after the fourth embodiment further comprises the third subsystem as described above, configured for applying the adhesive 26 on the peripheral region 22 of the surface of the lens and/or on a corresponding region of the optical element 16, and for fixing the optical element 16 to the lens with the adhesive 26.

In a variant of the system after the fourth embodiment shown on figure 7, the seventh subsystem 60 is configured for shaping the film patch 62 to present a correct curvature to be applied to the surface 14A and conform to the surface 14A.

The seventh subsystem comprises a carrier 70 comprising a carrier surface 72 receiving the film patch 62, and heating means 74 for thermoforming the film patch 72 and the carrier 70 so that the carrier surface 72 has a predetermined curvature corresponding to the curvature of the surface 14A the film patch 62 is to be applied on.

The film patch 62 is then transferred from the carrier 70 to the lens 14, for example under control of a camera 76 to ensure proper centering and positioning of the film patch 62 on the lens 14.

In a second variant of the fourth embodiment, the film patch comprises laminated coatings with different surface areas, with the hydrophobic coating having a surface area corresponding to the central region 24 of the surface 14A of the lens 14, and other coatings, such as, for example, the anti-reflective coating, having a surface area corresponding to the entirety of the surface 14A.

A method for manufacturing the optical device 10 with the system after the fourth embodiment comprises the following steps:
- providing a lens 14 and an optical element 16,
- applying the film patch 62 on the surface 14A of the lens 14,
- machining a peripheral edge 20 of the lens 14,
- removing debris deposited on the surface 14A of the lens 14 during the machining of the peripheral edge 20, and
- applying an adhesive 16 on a peripheral region 22 of the surface 14A of the lens 14 and/or on a corresponding region of the optical element 16, and fixing the optical element 16 to the lens 14 with the adhesive 26.

The method may also comprise steps of:
- fixing the film patch 62 to a carrier 70,
- thermoforming the carrier 70 and the film patch 62 fixed to the carrier 70, and
- transferring the film patch 62 from the carrier 70 to the surface 14A if the lens 14.

## Claims

1. System for manufacturing an optical device (10), the system being configured for:
- applying a hydrophobic coating over at least a central region (24) of a surface (12B, 14A) of a lens (12, 14),
- machining a peripheral edge (20) of the lens (12, 14),
- applying an adhesive (26) on a region (22) of the surface (12B, 14A) of the lens (12, 14) and/or on a corresponding region of the optical element (16), and fixing an optical element (16) to the lens (12, 14) with the adhesive (26).

2. System according to claim 1, the system also being configured for:
- removing debris deposited on the surface (12B, 14A) of the lens (12, 14) during the machining of the peripheral edge (20),
wherein the region (22) of the surface (12B, 14A) is a peripheral region (22) of the surface (12B, 14A), the peripheral region (22) of the surface (12B, 14A) not being covered by the hydrophobic coating.

3. System according to claim 2, the system being configured to apply a mask (34) over the peripheral region (22) of the surface (12B, 14A) of the lens (12, 14) during the application of the hydrophobic coating.

4. System according to claim 2, the system being configured for:
- removing at least the hydrophobic coating from at least the peripheral region (22) of the surface (12B, 14A) of the lens (12, 14).

5. System of claim 4, wherein the removing is performed after the machining, using an abrasive tool (42) to remove the hydrophobic coating over the peripheral region (22) of the surface (12B, 14A) of the lens (12, 14).

6. System of claim 5, wherein the abrasive tool (42) comprises a vibrating support (44) comprising an abrasive ring (46) placed in contact with the peripheral region (22) of the surface (12B, 14A) of the lens (12, 14), and possibly a lateral flange (48) fixed to the abrasive ring (46) and disposed around the edges (20) of the lens (12, 14), the vibrating support (44) being configured to vibrate in at least one direction (X) sensibly parallel to the surface (12B, 14A) of the lens (12, 14).

7. System of claim 5, the system comprising a plasma treatment device (52) for removing at least the hydrophobic coating over the peripheral region (22) of the surface (12B, 14A) of the lens (12, 14).

8. System of claim 7, wherein the system is also configured for applying a mask over a central region (22) of the surface (12B, 14A) of the lens (12, 14) before removing at least the hydrophobic coating over the peripheral region (22) of the surface (12B, 14A) of the lens (12, 14) with the plasma treatment device (52).

9. System according to claim 5, wherein the system is configured for removing the hydrophobic coating from the entirety of the surface (12B, 14A) of the lens using the plasma treatment device (52).

10. System according to claim 2, wherein applying the hydrophobic coating comprises applying a pre-shaped laminated film patch (62) comprising at least the hydrophobic coating (64), over the central region (24) of the surface (12B, 14A) of the lens (12, 14), the film patch (62) having a surface area smaller than the surface (12B, 14A) of the lens (12, 14), an external edge (68) of the film patch (62) delimiting the peripheral region (22).

11. System according to claim 10, wherein the film patch (62) comprises the hydrophobic coating (64) and at least one other coating (66), the hydrophobic coating (64) and the at least one other coating (66) being applied simultaneously.

12. System of claim 10 or 11, the system being configured for shaping the film patch (64) to present a correct curvature to be applied to the surface (12B, 14A), by fixing the film patch (62) to a carrier (70), thermoforming the carrier (70) and the film patch (62) fixed to the carrier (70), and separating the film patch (62) from the carrier (70) to apply the film patch (62) to the surface (12B, 14A).

13. System according to any one of the claims 2 to 12, wherein the peripheral region (22) of the surface (12B, 14A) of the lens (12, 14) extend over a width comprised between 0.5 mm and 5 mm, for example between 1 mm and 3 mm, from the peripheral edge (20) of the lens (12, 14) after machining.

14. Eyewear comprising an optical device (10), the optical device (10) comprising a lens (12, 14) and an optical element (16), the optical device (10) having been manufactured by:
- applying a hydrophobic coating over at least a central region (24) of a surface (12B, 14A) of the lens (12, 14),
- machining a peripheral edge (20) of the lens (12, 14),
- applying an adhesive (26) on a region (22) of the surface (12B, 14A) of the lens (12, 14) and/or on a corresponding region of the optical element (16), and fixing an optical element (16) to the lens (12, 14) with the adhesive (26).

15. A method for manufacturing an optical device (10), the method comprising:
- applying a hydrophobic coating over at least a central region (24) of a surface (12B, 14A) of a lens (12, 14),
- machining a peripheral edge (20) of the lens (12, 14),
- applying an adhesive (26) on a region (22) of the surface (12B, 14A) of the lens (12, 14) and/or on a corresponding region of the optical element (16), and fixing an optical element (16) to the lens (12, 14) with the adhesive (26).
